(19) Europäisches Patentamt / European Patent Office / Office européen des brevets

(11) **EP 3 092 817 B1**

(12) **FASCICULE DE BREVET EUROPEEN**

(45) Date de publication et mention de la délivrance du brevet:
**20.02.2019 Bulletin 2019/08**

(21) Numéro de dépôt: **15702523.0**

(22) Date de dépôt: **06.01.2015**

(51) Int Cl.:
*H04Q 9/00* *(2006.01)*  *H04L 12/413* *(2006.01)*
*H01M 10/42* *(2006.01)*  *H01M 10/48* *(2006.01)*

(86) Numéro de dépôt international:
**PCT/FR2015/050014**

(87) Numéro de publication internationale:
**WO 2015/104493 (16.07.2015 Gazette 2015/28)**

(54) **PROCÉDÉ DE COMMUNICATION AVEC UN CIRCUIT DE CONTRÔLE D'UNE BATTERIE D'ACCUMULATEURS**

VERFAHREN ZUR KOMMUNIKATION MIT EINER SCHALTUNG ZUR STEUERUNG EINES AKKUMULATORS

METHOD FOR COMMUNICATION WITH A CIRCUIT FOR CONTROLLING AN ACCUMULATOR BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2014 FR 1450138**

(43) Date de publication de la demande:
**16.11.2016 Bulletin 2016/46**

(73) Titulaire: **Renault S.A.S.**
**92100 Boulogne-Billancourt (FR)**

(72) Inventeurs:
• **BACQUET, Sylvain**
**F-38470 Chasselay (FR)**
• **LEIRENS, Sylvain**
**F-38000 Grenoble (FR)**
• **RANIERI, Marco**
**F-38610 Gieres (FR)**
• **TAVERNIER, François**
**F-42170 Saint Just Saint Rambert (FR)**

(74) Mandataire: **GIE Innovation Competence Group**
**310, avenue Berthelot**
**69372 Lyon Cedex 08 (FR)**

(56) Documents cités:
**EP-A1- 0 100 523     WO-A1-2012/171919**
**GB-A- 1 403 968**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne les batteries d'accumulateurs électrochimiques. Celles-ci peuvent par exemple être utilisées dans le domaine des transports électriques et hybrides ou les systèmes embarqués.

Un accumulateur électrochimique a habituellement une tension nominale de l'ordre de grandeur suivant:

1.2 V pour des batteries de type NiMH,

3.3 V pour une technologie Lithium ion phosphate de fer, LiFePO4,

3.7 V pour une technologie de type Lithium ion à base d'oxyde de cobalt.

Ces tensions nominales sont trop faibles par rapport aux exigences de la plupart des systèmes à alimenter. Pour obtenir le niveau de tension adéquat, on place en série plusieurs accumulateurs. Pour obtenir de fortes puissances et capacités, on place plusieurs groupes d'accumulateurs en série. Le nombre d'étages et le nombre d'accumulateurs en parallèle dans chaque étage varient en fonction de la tension, du courant et de la capacité souhaités pour la batterie. L'association de plusieurs accumulateurs est appelée une batterie d'accumulateurs.

La charge d'un accumulateur se traduit par une croissance de la tension à ses bornes. Chaque technologie d'accumulateur présente un profil de charge qui lui est propre, par exemple défini par l'évolution de la tension d'un accumulateur dans le temps pour un courant de charge donné.

On considère un accumulateur chargé par exemple lorsque, sous un courant donné, celui-ci a atteint un niveau de tension nominal défini par son processus électrochimique. Si la charge est interrompue avant que cette tension ne soit atteinte, l'accumulateur n'est pas complètement chargé. L'accumulateur peut aussi être considéré comme chargé lorsque la charge a duré un temps prédéterminé ou encore lorsque le courant de charge, alors que l'accumulateur est maintenu à tension constante, a atteint une valeur seuil minimale.

Du fait de dispersions de fabrication, les accumulateurs présentent en pratique des caractéristiques différentes. Ces différences, relativement faibles lorsque la batterie est neuve, s'accentuent avec l'usure hétérogène des accumulateurs de la batterie. Même en associant des accumulateurs d'un même lot de fabrication dans une batterie, des dispersions subsistent. La charge de la batterie est généralement supervisée par un dispositif de contrôle à partir de mesures de tension sur les différents accumulateurs.

La plage de fonctionnement d'un accumulateur de type Li - ion à base d'oxyde de cobalt est typiquement comprise entre 2,7 V et 4,2 V. Une utilisation hors de cette plage peut induire une détérioration irréversible des accumulateurs de la batterie. Une surcharge peut conduire à une destruction d'un accumulateur, à son usure accélérée, ou à une explosion par un phénomène d'emballement thermique. Des dispositifs de contrôle connus surveillent ainsi la charge de chaque accumulateur. La charge de tous les accumulateurs est donc interrompue lorsque l'accumulateur le plus chargé atteint une limite haute de la plage de fonctionnement. La tension de l'accumulateur le moins chargé est alors égale à une tension inférieure à la limite haute.

Le dispositif de contrôle interrompt également la décharge de la batterie lorsque l'accumulateur le moins chargé atteint une limite basse de la plage de fonctionnement.

Par conséquent, différentes connectiques sont connues pour permettre au dispositif de contrôle de vérifier le niveau de charge de chacun des accumulateurs. Pour accroître le niveau de sécurité de la batterie, il est également fréquent d'utiliser des connectiques permettant au dispositif de contrôle de vérifier d'autres paramètres de fonctionnement, tels que la température des accumulateurs.

Selon une structure connue en présence de nombreux accumulateurs, un circuit de mesure de tension et de température est fixé sur chaque accumulateur. Le dispositif de contrôle comprend plusieurs cartes esclaves gérées par une carte maître ou calculateur, ces cartes étant regroupées. Chaque carte esclave est connectée à plusieurs circuits de mesure, par exemple 8 ou 16, par l'intermédiaire de câblages point à point.

Dans une telle structure, les accumulateurs se trouvent à des tensions échelonnées atteignant des niveaux élevés. Ainsi, les mesures de tension doivent soit être isolées galvaniquement, soit être conçues pour une tension de mode commun élevée. Dans un véhicule automobile, le calculateur est généralement alimenté par une batterie 12 V, dédiée à l'alimentation du réseau de bord et des accessoires. La batterie du réseau de bord étant connectée à la masse du véhicule, il peut en outre s'avérer nécessaire de réaliser un isolement galvanique pour la communication entre les cartes esclaves et le calculateur. De plus, la connexion filaire point à point entre les circuits de mesures et les cartes esclaves nécessite un grand nombre de connexions et une longueur de faisceau conséquente. Par conséquent, une telle conception induit un coût et une complexité non négligeables. Par ailleurs, le nombre de connexions filaires point à point multiplie les risques de court-circuit avec une connexion directe aux accumulateurs, ce qui nécessite une conception et une réalisation particulièrement soignées impliquant notamment l'intégration de protections. Une telle connexion filaire est en outre sujette à des perturbations électromagnétiques, susceptibles d'altérer la fiabilité de la communication.

La demande de brevet PCT/EP2012/061119 décrit un système de batterie d'accumulateurs, comprenant :

- plusieurs accumulateurs électrochimiques connectés en série ;

- une connexion électrique de puissance destinée à raccorder une charge électrique ou une alimentation de recharge auxdits accumulateurs électrochimiques ;
- un dispositif de contrôle raccordé aux accumulateurs électrochimiques par l'intermédiaire de la connexion électrique de puissance.

Le système comprend en outre :

- plusieurs circuits de mesure, chacun de ces circuits de mesure étant accolé à un accumulateur électrochimique respectif et étant configuré pour mesurer la tension aux bornes de cet accumulateur respectif ;
- plusieurs circuits de communication, chacun de ces circuits de communication étant accolé à un accumulateur électrochimique respectif et étant configuré pour induire une baisse de tension aux bornes de cet accumulateur respectif lorsque la tension mesurée franchit un seuil.

Par ailleurs, en vue d'éviter des collisions de communication entre les différents circuits de communication, le document propose différents types de codage lors des générations des baisses de tension, notamment en utilisant des codes d'étalement basés sur des séquences pseudo aléatoires.

Cependant, la mise en oeuvre de ses codes nécessite des circuits d'émission, de réception et de traitement dont le coût est non négligeable, notamment du fait des ressources en mémoire nécessaires.

Le document WO 2012/171919 A1 décrit un système de circuits de communication accolés à des accumulateurs électrochimiques respectifs connectés en série.

L'invention vise à résoudre un ou plusieurs de ces inconvénients. L'invention porte ainsi sur un procédé de communication entre un nombre M de circuits de communication et un dispositif de contrôle d'accumulateurs électrochimiques, les circuits de communication étant accolés à des accumulateurs électrochimiques respectifs connectés en série, et les circuits de communication étant configurés pour émettre des trames de données vers le dispositif de contrôle par l'intermédiaire d'une connexion électrique de puissance destinée à raccorder une charge électrique auxdits accumulateurs électrochimiques,

- dans lequel chaque circuit de communication d'indice i réalise, pour une succession d'intervalles de transmission ayant une durée moyenne Tri, une émission à un instant aléatoire d'une unique trame d'une durée inférieure ou égale à Lti durant chacun de ces intervalles de transmission,
  avec Tri> Lti * M ;
- dans lequel lesdits intervalles de transmission des différents circuits de communication se chevauchent temporellement.

Selon une variante, pour chaque circuit de communication, plusieurs desdites trames émises durant des intervalles de transmission successifs sont identiques.

Selon une autre variante, ladite émission de chaque circuit d'indice i vérifie l'inégalité Tri> Lti *5* M

Selon encore une variante, lesdites durées moyennes Tri et lesdites durées de trame Lti sont configurées pour que la probabilité de collision de l'émission d'une trame d'un circuit de communication avec l'émission d'une trame d'un autre circuit de communication soit inférieure à $10^{-3}$.

Selon encore une autre variante, les émissions de trames des différents circuits de communication sont non synchronisées.

Selon une variante, la communication entre lesdits circuits de communication et le dispositif de contrôle est unidirectionnelle.

Selon encore une variante, plusieurs intervalles de transmission successifs des différents circuits de communication ont une même durée.

Selon une autre variante, au moins deux intervalles de transmission successifs présentent des durées différentes.

Selon encore une autre variante, chaque circuit de communication comprend :

- des conversions analogique/numérique successives par un convertisseur dont au moins une tension de référence et une entrée sont connectées à des niveaux de tension flottants ;
- la mémorisation du bit de poids faible pour plusieurs desdites conversions analogique/numérique successives ;
- la génération d'un nombre binaire incluant les bits de poids faible mémorisés ;
- la définition d'un intervalle de transmission comme un multiple du nombre binaire par la durée d'un cycle d'horloge du circuit de communication;
- ladite émission de l'unique trame d'un intervalle de transmission à la fin de l'intervalle de transmission défini par ledit nombre binaire.

Selon une variante, chacun desdits circuits de communication émet les trames en abaissant sélectivement la tension aux bornes de son accumulateur respectif.

Selon encore une variante, lesdites trames sont émises en bande de base avec une fréquence binaire comprise entre 100KHz et 1 MHz.

Selon une autre variante, chacun desdits circuits de communication abaisse sélectivement la tension aux bornes de son accumulateur respectif en connectant sélectivement une charge électrique entre les bornes de cet accumulateur.

L'invention porte également sur un système de batterie, comprenant :

- un nombre M accumulateurs électrochimiques respectifs connectés en série ;
- un circuit de contrôle connecté aux accumulateurs électrochimiques par l'intermédiaire d'une connexion électrique de puissance destinée à raccorder une charge électrique auxdits accumulateurs électrochimiques ;
- M circuits de communication accolés à des accumulateurs respectifs, les circuits de communication étant programmés pour émettre des trames de données vers le dispositif de contrôle par l'intermédiaire de la connexion électrique de puissance, de sorte que chaque circuit de communication d'indice i réalise, pour une succession d'intervalles de transmission ayant une durée moyenne Tri, une émission à un instant aléatoire d'une unique trame d'une durée inférieure ou égale à Lti durant chacun de ces intervalles de transmission,

avec Tri> Lti * M, lesdits circuits de communication étant programmés pour que leurs intervalles de transmission se chevauchent temporellement.

Selon une variante, chaque circuit de communication d'indice i réalise ladite émission à un instant aléatoire vérifiant la relation Tri> Lti * 5 * M.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation schématique d'un système de batterie d'accumulateurs susceptible de mettre en oeuvre l'invention ;
- la figure 2 est un schéma électrique équivalent à un circuit de mesure/communication et à son accumulateur associé ;
- la figure 3 est un schéma d'un exemple de circuit de communication destiné à mettre en oeuvre l'invention ;
- la figure 4 est un schéma d'un exemple de circuit de tirage aléatoire d'un instant d'émission de trame ;
- les figures 5 et 6 sont des courbes illustrant des probabilités de non détection de trames en fonction de différents paramètres ;
- la figure 7 est un schéma d'un autre exemple de circuit de tirage aléatoire d'un instant d'émission de trame.

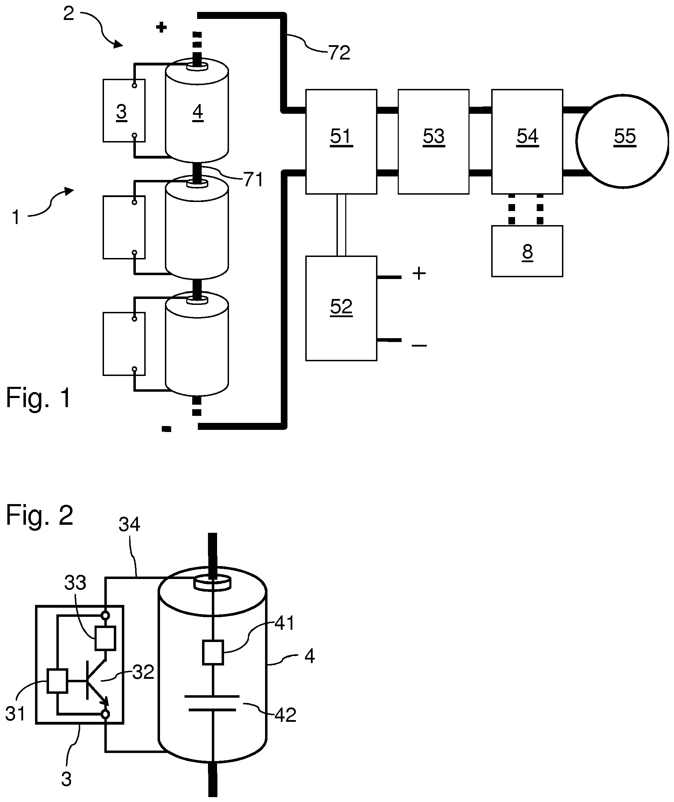

La figure 1 illustre schématiquement un système de batterie d'accumulateurs 1 dans lequel l'invention peut être mise en oeuvre. Le système de batterie 1 est utilisé pour assurer l'entraînement d'un moteur électrique 55. Le système 1 comprend une batterie 2 incluant des accumulateurs électrochimiques 4 connectés en série. La batterie 2 comprend un grand nombre d'accumulateurs 4, typiquement entre 20 et 100 accumulateurs en fonction de la tension nécessaire et du type d'accumulateurs utilisé. Les accumulateurs 4 sont connectés en série par l'intermédiaire de connexions électriques de puissance 71. Chaque accumulateur 4 comporte un circuit 3 qui lui est accolé. Un circuit 3 est par exemple typiquement fixé sur son élément associé. Les circuits 3 ont dans cet exemple à la fois une fonction de mesure de tension et une fonction de communication. Les circuits 3 seront désignés par la suite par le terme commun de circuit de communication.

La batterie 2 est connectée à un module de filtrage 51 par l'intermédiaire de connexions électriques de puissance 72. Un filtre d'antiparasitage électromagnétique 53, dit filtre CEM est également connecté à la batterie 2 par l'intermédiaire des connexions électriques de puissance 72. Le filtre 53 est connecté entre le module de filtrage 51 et un convertisseur alternatif/continu 54. Le convertisseur alternatif/continu 54 est également connecté aux connexions électriques 72 et forme l'interface entre la batterie 2 et les composants fonctionnant en courant alternatif, en l'occurrence un moteur électrique 55 et une source de courant alternatif de recharge 8.

Le filtre 53 permet de façon connue en soi d'éliminer les perturbations électromagnétiques sur le réseau continu lors du fonctionnement du moteur 55. Le filtre 53 permet notamment de filtrer les harmoniques de rang élevé qui peuvent être induites par les circuits de commutation de puissance des forts courants de charge ou de décharge. Le module de filtrage 51 démodule les informations fournies par les circuits de communication 3. Le module de filtrage 51 fournit un signal basse tension correspondant au signal transmis par les circuits de communication 3. Un dispositif de contrôle centralisé, formé en l'occurrence d'un calculateur 52 est connecté au module de filtrage 51 pour récupérer le signal basse tension. Le calculateur 52 peut être alimenté par un réseau basse tension, par exemple le réseau de bord d'un véhicule automobile. Du fait de la présence du filtre 53 entre le convertisseur 54 et le module de filtrage 51, les informations transmises par les circuits de communication 3 ne sont pas perturbées par les harmoniques liées au hachage réalisé dans le convertisseur 54 ou dans la commande du moteur 55. Lorsque les informations transmises par les circuits de communication sont codées, le calculateur 52 procède au décodage pour identifier par exemple le circuit de communication émetteur et le contenu de l'information transmise (valeur de tension, alerte de seuil de tension haut, alerte de seuil de tension bas, température de l'accumulateur...). Chaque circuit de communication 3 peut ainsi présenter un codage propre, par exemple par une largeur d'impulsion distinctive, par un motif de transmission distinctif ou par une fréquence de transmission distinctive. Un éventuel codage pourra être choisi en fonction de la faculté du décodage à mettre en oeuvre au niveau du calculateur 52, afin de réduire les contraintes de dimensionnement de celui-ci.

Le système 1 comprend des moyens permettant d'interrompre sélectivement la connexion électrique entre la batterie 2 et le convertisseur 54. La batterie 2 peut ainsi être sélectivement isolée d'une charge électrique à alimenter ou d'une alimentation de recharge. Le module de filtrage 51 peut par exemple inclure des interrupteurs ouvrant les connexions électriques 72 entre la batterie et le convertisseur 54. Le calculateur 52 transmet par exemple des commandes d'ouverture de tels interrupteurs lors de la détection d'une fin de charge ou d'une décharge maximale. Le calculateur peut également commander une réduction du courant débité par la batterie 2 lorsque celle-ci atteint un seuil de décharge, afin de ne pas avoir à interrompre brutalement l'alimentation électrique de la charge électrique 55.

La figure 2 représente un schéma électrique équivalent à un exemple de circuit de communication 3 et à son accumulateur associé 4. Le circuit 3 comprend une branche comportant en série un transistor de puissance 32 et une résistance de décharge 33. Cette branche est connectée en parallèle aux bornes de l'accumulateur 4 par l'intermédiaire d'un câble 34.

Le circuit 34 comprend également un microcontrôleur 31 connecté aux bornes de l'accumulateur 4. Le microcontrôleur 31 est configuré pour assurer une mesure de tension aux bornes de l'accumulateur 4. Le microcontrôleur 31 peut également être configuré pour mesurer d'autres paramètres de fonctionnement de l'accumulateur 4, par exemple sa température.

Le circuit de communication 3 comporte un mode de fonctionnement statique dans lequel il mesure la tension aux bornes de l'accumulateur 4 et un mode de fonctionnement dynamique dans lequel il communique avec le calculateur 52.

En fonctionnement statique, le transistor 32 est bloqué. Dans ce fonctionnement statique, le microcontrôleur 31 réalise la mesure de la tension aux bornes de l'accumulateur 4.

En fonctionnement dynamique, le transistor 32 est passant. Dans ce fonctionnement dynamique, le microcontrôleur 31 communique avec le calculateur 52 en réalisant des baisses de tension aux bornes de l'accumulateur 4. Ces baisses de tension présentent une amplitude suffisante pour être détectées par le calculateur 52. Le microcontrôleur 31 communique ainsi par courant porteur avec le calculateur 52 par l'intermédiaire des connexions électriques de puissance 71 et 72. La communication peut être réalisée par des baisses de tension alternatives, à une fréquence prédéterminée, de façon à former des trames de données. Les trames sont par exemple émises en bande de base.

Bien que le circuit de communication 3 ait été décrit sur la base d'un schéma incluant une résistance 33 et un transistor de puissance 32 en série, le circuit de communication 3 peut être réalisé par tous moyens appropriés, par exemple en utilisant un transistor de puissance présentant une résistance de conduction permettant de générer une baisse de tension de l'accumulateur 4 avec l'ordre de grandeur souhaité.

L'invention s'avère particulièrement avantageuse lorsque l'une et/ou l'autre des conditions suivantes sont réunies :

- la communication entre les circuits de communication 3 et le calculateur 52 est unidirectionnelle, des circuits de communication vers le calculateur 52 ;
- les circuits de communication 3 ne communiquent pas entre eux et leurs émissions ne sont donc pas synchronisées.

Le but de l'invention est de limiter au maximum les collisions entre les trames émises par les circuits de communication 3 dont les périodes de transmission se chevauchent temporellement, et ainsi de maximiser la probabilité du calculateur 52 de recevoir une trame émise par un circuit de communication, sans présenter les inconvénients cités pour l'art antérieur (problématiques d'isolation, coût induit par le codage/décodage...).

L'invention propose que chaque circuit de communication 3 émette une unique trame durant chaque période de transmission à un instant aléatoire, et ce pour plusieurs périodes de transmission successives. Pour chaque circuit de communication 3 d'indice i, pour garantir l'absence de collision, la durée maximale Lti d'une trame émise et la durée moyenne de la période de transmission Tri de ce circuit de communication 3 est fonction du nombre M de circuits de communication 3 devant communiquer. Ainsi, la relation suivante sera vérifiée : Tri> Lti * M.

Par une émission aléatoire des trames durant leur intervalle de transmission, on limite la corrélation temporelle entre les émissions de trames par les différents circuits de communication 3, et on limite ainsi les risques de collision.

Les périodes de transmission Tri peuvent présenter des durées variables $Tri_j$. Pour un nombre nit d'intervalles de transmission successifs au moins égal à 10 et identifiés par un indice j, on définit Tri par :

$$Tri = \frac{\sum_{j=1}^{nit} Tri_j}{nit}$$

Une étude théorique de probabilité de collision entre des trames envoyées par M circuits de communication 3 sur un même canal de communication est détaillée par la suite.

Un premier circuit de communication 3 émet des trames avec une période ou intervalle de transmission ou de répétition d'une durée T constante. On a alors T = Tri. Un nombre n (=M-1) d'autres circuits de communication 3 émettent une unique trame durant cette période de transmission. On suppose que toutes les trames émises par tous les circuits de communication 3 ont une même durée Ltrame (exprimée en pourcentage de la durée T), émises à un instant aléatoire (avec une équiprobabilité de positionnement temporel d'une trame) sur la période de transmission.

On définit les évènements suivants :

Xk : collision de la trame du circuit de communication k ;

$X_k^c$ : Absence de collision de la trame du circuit de communication k ;

A : absence de collision

Soit P(Xk) la probabilité de collision d'une trame d'un dispositif de communication 3 avec une des trames des k autres dispositifs de communication déjà prises en compte dans cet intervalle.

On constate que :

P(X1)=Ltrame
P(X2)=(2*Ltrame+Ltrame)
P(X3)=(4*Ltrame+Ltrame)

Par récurrence on en déduit que :
P(Xn)=(2n*Ltrame+Ltrame)

On en déduit que $A = \bigcup_{k=1}^{n} X_k^c$

Ce qui implique :

$$P(A) = \prod_{k=1}^{n}(1 - P(X_k))$$

Nous allons considérer un nouvel événement qui nous sera utile par la suite ; $S_t^n$ : {un nombre t de collisions parmi toutes les n trames envoyées}

$$P(S_1^n) = \sum_{i=1}^{n} \frac{P(A)*P(X_i)}{P(X_i^c)}$$

$$P(S_2^n) = \sum_{i=2}^{n} S_1^{i-1} * \frac{P(X_i)}{P(X_i^c)}$$

$$P(S_t^n) = \sum_{i=t}^{n} S_{t-1}^{i-1} * \frac{P(X_i)}{P(X_i^c)}$$

Le cas critique est l'émission d'une trame d'alerte par un circuit de communication 3, et qui doit être détectée en un certain temps par le dispositif de contrôle 52. Nous avons M circuits de communication 3 et on veut déterminer la probabilité que l'on a de détecter cette trame d'alerte.

Soit les évènements suivants :

Yn : {Collision de la n-ième trame}

$Y_n^c$ : {Absence de collision de la n-ième trame}

On en déduit les probabilités conditionnelles

$$P(Y_n^c / S_1^n) = 1 - \frac{2}{n}$$

$$P(Y_n^c / S_2^n) = 1 - \frac{3}{n}$$

$$P(Y_n^c / S_t^n) = 1 - \frac{t}{n}$$

$$P(Y_n^c / A) = 1$$

$$P(Y_n^c) = P\left(\left(\bigcap_{i=1}^{n} S_i^n\right) \bigcap A \bigcap Y_n^c\right)$$

Les événements $S_t^n$ et A sont disjoints

$$P(Y_n^c) = P\left(\left(\bigcap_{i=1}^{n} S_i^n\right) \bigcap Y_n^c\right) + P(Y_n^c \bigcap A)$$

$$P(Y_n^c) = \sum_{i=1}^{n} P(Y_n^c / S_i^n) * P(S_i^n) + P(A)$$

$$P(Y_n) = 1 - P(Y_n^c)$$

On suppose que P(Yn)=P(Y1) car toutes les trames sont identiques.

Des simulations ont été réalisées pour des cas concrets, avec différentes valeurs de M, avec différentes fréquences d'émission Freq en bande de base, comprises entre 100KHz et 1Mhz (domaine de fréquence favorable à la communication sur une connexion de puissance de batterie), avec différents nombre de bits Nbit compris entre 5 et 20 pour les trames, en modulant la fréquence de répétition de trame F1 (=1/T) pour les dispositifs de communication :

$$LTrame = \frac{Nbit * F1}{Freq}$$

La probabilité de ne pas détecter une trame pendant une durée Tps s'exprime alors :

$$P(Ys) = P(Y_n)^{Tps/T}$$

On définit que la défaillance notée D est un temps de non détection.

On peut donc écrire la formule du taux de défaillance maximal par heure comme étant :

$$T_{def} = P(Y_1)^{D/T} * T / 3600$$

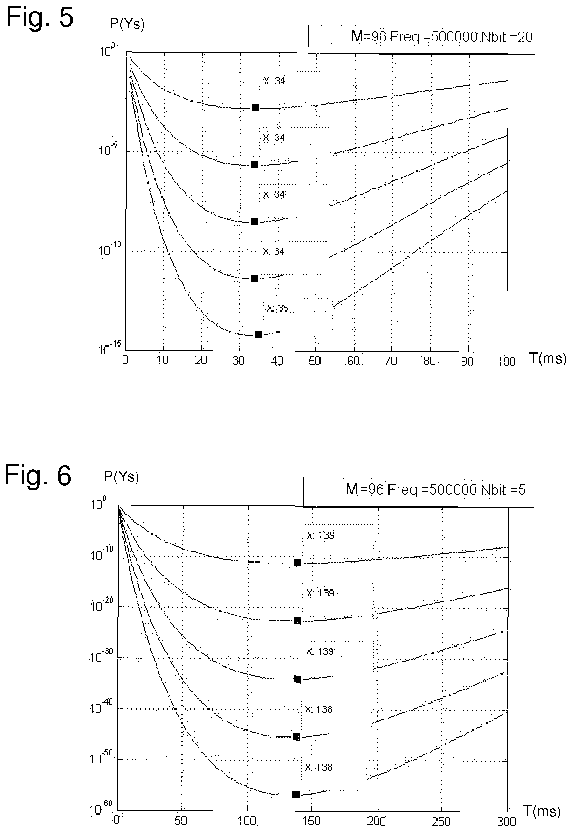

La figure 5 illustre 5 courbes qui représentent la probabilité P(Ys) de ne détecter aucune trame par le circuit de contrôle 52 pour une durée d'analyse valant respectivement 1, 2, 3, 4, ou 5 secondes en fonction de la période T, avec M=96, Freq=500KHz, Nbit=20.

Cette figure montre :

- que l'augmentation de la durée d'analyse par le circuit de contrôle 52 réduit linéairement le risque de non détection pendant la durée d'analyse ;
- qu'il existe un intervalle de transmission T optimal pour des valeurs données de M, Freq et Nbit.

La figure 6 illustre 5 courbes qui représentent la probabilité P(Ys) de ne détecter aucune trame par le circuit de contrôle 52 pour une durée d'analyse valant respectivement 1, 2, 3, 4, ou 5 secondes en fonction de la période T, avec M=96, Freq=500KHz, Nbit=5.

On en conclut que la période de transmission optimale pour un circuit de communication 3 est obtenue avec une valeur supérieure lorsque la durée de trame est plus petite. Bien entendu, la probabilité d'absence de collision est nettement supérieure avec une durée de trame inférieure.

En fixant au préalable la probabilité de détection d'une trame d'un nombre de bits donné en un temps donné avec un nombre de circuits de communication donné, l'homme du métier pourra aisément définir une période de transmission et une fréquence en bande de base permettant de satisfaire cette condition de probabilité. Dans de nombreux systèmes, on configurera les paramètres d'émission de sorte que la probabilité de non détection d'une trame par le circuit de contrôle 52 soit inférieure à $10^{-3}$.

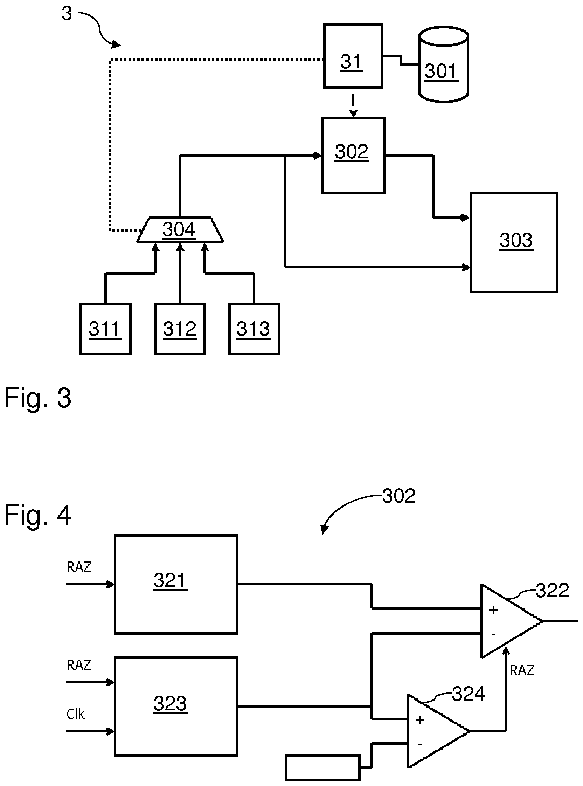

La figure 3 illustre un perfectionnement avantageux d'un circuit de communication 3. Ce circuit de communication 3 est destiné à permettre la communication d'informations de natures différentes à destination du calculateur 52, les trames d'informations de natures différentes présentant des durées différentes. Le circuit de communication 3 comprend un micro contrôleur 31, une table 301, un module de tirage aléatoire 302, une interface d'émission 303 et un multiplexeur 304.

Le circuit de communication 3 comporte une interface de réception d'un signal d'alerte 311, une interface de réception d'une mesure de tension 312 (ou un capteur de tension) et une interface de réception d'une mesure de température 313 (ou un capteur de température). Les interfaces 311 à 313 sont connectées à l'entrée du multiplexeur 304.

Le micro contrôleur 31 commande le multiplexeur 304, de sorte que ce multiplexeur 304 applique sur sa sortie la valeur fournie par une des interfaces 311 à 313 sélectionnée par le micro contrôleur 31. La valeur de sortie du multiplexeur 304 est appliquée sur une entrée de l'interface d'émission 303. En fonction de l'interface 311 à 313 qu'il a sélectionnée, le microcontrôleur 31 consulte la table 301 et récupère une durée de trame et une durée d'intervalle de transmission correspondantes. La table mémorise par exemple une longueur de trame de 4 bits et un intervalle de transmission de 5 ms pour un signal d'alerte, une longueur de trame de 15 bits et un intervalle de transmission de 500 ms pour une mesure de température, et une longueur de trame de 12 bits et un intervalle de transmission de 200 ms pour une mesure de tension. Ces valeurs seront par exemple déterminées en fonction de la longueur des données et de la probabilité tolérée de non réception pour chacune d'entre elles. Le microcontrôleur 31 fournit la durée de trame et la durée de l'intervalle de transmission au module de tirage aléatoire 302. Le module de tirage aléatoire 302 génère une commande de transmission à un instant aléatoire durant l'intervalle de transmission indiqué par le microcontrôleur 31. Le module de tirage aléatoire 302 applique la commande de transmission générée sur une entrée de l'interface d'émission 303. À réception de cette commande, l'interface 303 émet sur une connexion de puissance 71 la valeur appliquée sur son autre entrée.

La figure 4 représente schématiquement un exemple de module de tirage aléatoire 302. Un circuit 321 génère une valeur comprise entre 0 et la durée de la période de transmission choisie. La valeur de sortie du circuit 321 est appliquée sur une entrée non inverseuse d'un comparateur 322. Un compteur 323 incrémente sa valeur de sortie à réception d'un signal d'horloge. La valeur du compteur 323 est appliquée d'une part sur l'entrée inverseuse du comparateur 322 et sur une entrée non inverseuse d'un comparateur 324. La valeur de durée de la période de transmission choisie est appliquée sur l'entrée inverseuse du comparateur 324. Le signal de sortie du comparateur 324 est appliqué pour réinitialiser le comparateur 322.

Tant que la sortie du compteur 323 n'a pas atteint la valeur générée par le circuit 321, le comparateur 322 ne génère pas de signal de commande sur sa sortie. Dès que la sortie du compteur 323 a atteint la valeur générée par le circuit 321, le signal de commande est généré par le comparateur 322 sur sa sortie.

Tant que la sortie du compteur 323 n'a pas atteint la valeur de la période de transmission appliquée sur l'entrée inverseuse du comparateur 324, le comparateur 324 ne réinitialise pas le comparateur 322. Dès que la sortie du compteur 323 a atteint la valeur de la période de transmission appliquée sur l'entrée inverseuse du comparateur 324, le comparateur 324 réinitialise le comparateur 322.

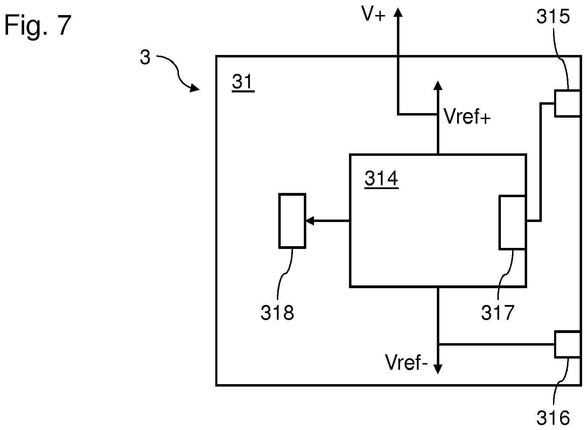

La figure 7 est un schéma d'un autre exemple de circuit de tirage aléatoire d'un instant d'émission de trame. Cet exemple sera détaillé dans un cas particulier où le microcontrôleur 31 du circuit de communication 3 est le modèle diffusé sous la référence PIC18F14K22. Le tirage aléatoire d'un instant d'émission est réalisé au moyen d'un convertisseur analogique/numérique 314 du microcontrôleur 31. Dans cet exemple, on peut se dispenser de fonctions logiques de génération de valeurs quasi-aléatoires ou d'un tableau de valeurs prédéfinies, en reposant simplement sur l'absence de synchronisation entre les microcontrôleurs des différents circuits de communication 3.

L'instant d'émission est déterminé par un nombre de cycles d'un circuit de temporisation. Le nombre de cycles du circuit de temporisation peut être déterminé aléatoirement par l'intermédiaire du convertisseur 314. Par exemple, on peut récupérer plusieurs bits de poids faible générés par le convertisseur 314 afin de constituer le nombre de cycles. Par exemple, en récupérant 10 fois successivement le bit de poids faible généré par le convertisseur 314, on forme un nombre binaire de 10 bits et on dispose de 1024 ($2^{10}$) valeurs pour le nombre de cycles. La durée d'un cycle peut par exemple être de 512 microsecondes. Une émission est ainsi seulement réalisée lorsque le nombre déterminé de cycles du circuit de temporisation est effectué. Un nouveau nombre de cycles est ensuite déterminé aléatoirement pour définir l'instant d'émission suivant.

La génération aléatoire des nombres de cycles à partir des bits de poids faible est par exemple effectuée de la manière suivante par le convertisseur 314. On connecte la borne de tension de référence positive Vref+ du convertisseur 314 à une tension d'alimentation à Vcc du microcontrôleur 31 et la borne de tension de référence négative Vref- du convertisseur 314 à une borne 316 du microcontrôleur 31 maintenue flottante (par exemple connectée à une piste formée sur le substrat et présentant une extrémité libre). L'entrée 317 du convertisseur 314 peut être connectée à une borne 315 du microcontrôleur 31 maintenue également flottante.

À chaque conversion analogique/numérique réalisée, la valeur binaire générée par le convertisseur 314 a un bit de poids faible fortement dépendant du bruit électronique (bruit thermique, bruit radiofréquence etc...), même si l'ordre de grandeur de cette valeur binaire est relativement constant. Ce bit de poids faible a une équiprobabilité de prendre la valeur 0 ou 1. Un circuit 318 mémorise ces bits de poids faible successifs pour générer le nombre de cycles de l'intervalle de transmission. Par conséquent, le nombre de cycles de l'intervalle de transmission généré par une telle association de bits de poids faible est aléatoire. La durée moyenne d'émission Tri correspondra alors à la valeur médiane des nombres de cycles pouvant être générés, soit 512 cycles de temporisation.

Ainsi, les différents circuits de communication 3 peuvent tous générer aléatoirement des instants de transmission variables pour limiter les collisions. De plus, même si une collision intervient entre deux transmissions de circuits de communication 3, cette collision n'implique pas que la transmission suivante a également une probabilité de collision accrue, puisque les instants de transmission suivants de ces circuits 3 seront tous deux fixés aléatoirement. De plus, du fait de l'absence de synchronisation et des dispersions des fréquences d'horloge des différents microcontrôleurs 31, ceux-ci vont naturellement présenter des cycles d'horloge qui se décalent.

Selon le contenu des trames émises, le circuit de communication 3 peut commander l'émission d'une trame identique durant plusieurs périodes de transmission successives. Une trame dont la réception est importante pour le fonctionnement du système 1 pourra ainsi être transmise de façon redondante.

## Revendications

1. Procédé de communication entre un nombre M de circuits de communication (3) et un dispositif de contrôle (52) d'accumulateurs électrochimiques, les circuits de communication étant accolés à des accumulateurs électrochimiques (4) respectifs connectés en série, et les circuits de communication étant configurés pour émettre des trames de données vers le dispositif de contrôle par l'intermédiaire d'une connexion électrique de puissance (71,72) destinée à raccorder une charge électrique (55) auxdits accumulateurs électrochimiques, **caractérisé**

   - **en ce que** chaque circuit de communication d'indice i réalise, pour une succession d'intervalles de transmission ayant une durée moyenne $Tr_i$, une émission à un instant aléatoire d'une unique trame d'une durée inférieure ou égale à $Lt_i$ durant chacun de ces intervalles de transmission, avec $Tr_i > Lt_i * M$ ;
   - et **en ce que** lequel lesdits intervalles de transmission des différents circuits de communication (3) se chevauchent temporellement.

2. Procédé de communication selon la revendication 1, dans lequel, pour chaque circuit de communication (3), plusieurs desdites trames émises durant des intervalles de transmission successifs sont identiques.

3. Procédé de communication selon l'une quelconque des revendications précédentes, dans lequel ladite émission de chaque circuit d'indice i vérifie l'inégalité $Tr_i > Lt_i * 5 * M$

4. Procédé de communication selon l'une quelconque des revendications précédentes, dans lequel lesdites durées moyennes $Tr_i$ et lesdites durées de trame $Lt_i$ sont configurées pour que la probabilité de collision de l'émission d'une trame d'un circuit de communication (3) avec l'émission d'une trame d'un autre circuit de communication soit inférieure à 10⁻³.

**5.** Procédé de communication selon l'une quelconque des revendications précédentes, dans lequel les émissions de trames des différents circuits de communication (3) sont non synchronisées.

**6.** Procédé de communication selon l'une quelconque des revendications précédentes, dans lequel la communication entre lesdits circuits de communication (3) et le dispositif de contrôle (52) est unidirectionnelle.

**7.** Procédé de communication selon l'une quelconque des revendications précédentes, dans lequel plusieurs intervalles de transmission successifs des différents circuits de communication (3) ont une même durée.

**8.** Procédé de communication selon l'une quelconque des revendications précédentes, dans lequel au moins deux intervalles de transmission successifs présentent des durées différentes.

**9.** Procédé de communication selon la revendication 8, comprenant dans chaque circuit de communication (3) :

- des conversions analogique/numérique successives par un convertisseur (314) dont au moins une tension de référence et une entrée sont connectées à des niveaux de tension flottants ;
- la mémorisation du bit de poids faible pour plusieurs desdites conversions analogique/numérique successives ;
- la génération d'un nombre binaire incluant les bits de poids faible mémorisés ;
- la définition d'un intervalle de transmission comme un multiple du nombre binaire par la durée d'un cycle d'horloge du circuit de communication (3) ;
- ladite émission de l'unique trame d'un intervalle de transmission à la fin de l'intervalle de transmission défini par ledit nombre binaire.

**10.** Procédé de communication selon l'une quelconque des revendications précédentes, dans lequel chacun desdits circuits de communication émet les trames en abaissant sélectivement la tension aux bornes de son accumulateur respectif.

**11.** Procédé de communication selon la revendication 10, dans lequel lesdites trames sont émises en bande de base avec une fréquence binaire comprise entre 100KHz et 1MHz.

**12.** Procédé de communication selon la revendication 10 ou 11, dans lequel chacun desdits circuits de communication abaisse sélectivement la tension aux bornes de son accumulateur respectif en connectant sélectivement une charge électrique entre les bornes de cet accumulateur.

**13.** Système de batterie (1), comprenant :

- un nombre M accumulateurs électrochimiques (4) respectifs connectés en série ;
- un circuit de contrôle (52) connecté aux accumulateurs électrochimiques par l'intermédiaire d'une connexion électrique de puissance (71,72) destinée à raccorder une charge électrique (55) auxdits accumulateurs électrochimiques ;
- M circuits de communication (3) accolés à des accumulateurs respectifs ;

**Caractérisé en ce que** les circuits de communication étant programmés pour émettre des trames de données vers le dispositif de contrôle par l'intermédiaire de la connexion électrique de puissance, de sorte que chaque circuit de communication d'indice i réalise, pour une succession d'intervalles de transmission ayant une durée moyenne $Tr_i$, une émission à un instant aléatoire d'une unique trame d'une durée inférieure ou égale à $Lt_i$ durant chacun de ces intervalles de transmission,

avec $Tr_i > Lt_i * M$, lesdits circuits de communication (3) étant programmés pour que leurs intervalles de transmission se chevauchent temporellement.

**14.** Système de batterie (1) selon la revendication 13, dans lequel chaque circuit de communication d'indice i réalise ladite émission à un instant aléatoire vérifiant la relation $Tr_i > Lt_i * 5 * M$.

**Patentansprüche**

**1.** Verfahren zur Kommunikation zwischen einer Anzahl M von Kommunikationsschaltungen (3) und einer Steuervorrichtung (52) von elektrochemischen Akkumulatoren, wobei die Kommunikationsschaltungen an elektrochemischen Akkumulatoren (4), die jeweils in Reihe geschaltet sind, angefügt sind und die Kommunikationsschaltungen konfiguriert sind, um Datenrahmen zu der Steuervorrichtung über eine elektrische Leistungsverbindung (71, 72) zu übertragen, die dazu bestimmt ist, eine elektrische Last (55) an die elektrochemischen Akkumulatoren anzuschließen, **dadurch gekennzeichnet,**

- **dass** jede Kommunikationsschaltung des Index i
für eine Abfolge von Übertragungsintervallen mit einer durchschnittlichen Dauer $Tr_i$ ein Sen-

den zu einem zufälligen Zeitpunkt eines einzelnen Rahmens mit einer Dauer von weniger als oder gleich $Lt_i$ während jedes dieser Übertragungsintervalle durchführt, mit $Tr_i > Lt_i * M$,
- und dadurch, dass welche sich die Übertragungsintervalle der verschiedenen Kommunikationsschaltungen (3) zeitlich überlappen.

2. Verfahren zur Kommunikation nach Anspruch 1, wobei für jede Kommunikationsschaltung (3) mehrere der Rahmen, die während aufeinanderfolgender Übertragungsintervalle gesendet werden, identisch sind.

3. Verfahren zur Kommunikation nach einem der vorangehenden Ansprüche, wobei das Senden von jeder Schaltung des Index i die Ungleichheit von $Tr_i > Lt_i *5* M$ überprüft.

4. Kommunikationsverfahren nach einem der vorhergehenden Ansprüche, wobei die durchschnittlichen Dauern $Tr_i$ und die Rahmendauern $Lt_i$ konfiguriert sind, damit die Kollisionswahrscheinlichkeit des Sendens eines Rahmens einer Kommunikationsschaltung (3) mit dem Senden eines Rahmens einer anderen Kommunikationsschaltung niedriger als $10^{-3}$ ist.

5. Verfahren zur Kommunikation nach einem der vorhergehenden Ansprüche, wobei die Sendungen von Rahmen der verschiedenen Kommunikationsschaltungen (3) nicht synchronisiert werden.

6. Verfahren zur Kommunikation nach einem der vorhergehenden Ansprüche, wobei die Kommunikation zwischen den Kommunikationsschaltungen (3) und der Steuervorrichtung (52) unidirektional ist.

7. Verfahren zur Kommunikation nach einem der vorhergehenden Ansprüche, wobei mehrere aufeinanderfolgende Übertragungsintervalle der verschiedenen Kommunikationsschaltungen (3) eine gleiche Dauer aufweisen.

8. Verfahren zur Kommunikation nach einem der vorhergehenden Ansprüche, wobei mindestens zwei aufeinanderfolgende Übertragungsintervalle verschiedene Dauern aufweisen.

9. Verfahren zur Kommunikation nach Anspruch 8, umfassend in jeder Kommunikationsschaltung (3):

- aufeinanderfolgende Analog-Digital-Umwandlungen durch einen Wandler (314), wovon mindestens eine Referenzspannung und ein Eingang mit schwebenden Spannungspegeln verbunden sind,
- das Speichern des niedrigstwertigen Bits für mehrere der aufeinanderfolgenden Analog-Digital-Umwandlungen,
- das Erzeugen einer Binärzahl, die die gespeicherten niedrigstwertigen Bits enthält,
- das Definieren eines Übertragungsintervalls als ein Vielfaches der Binärzahl durch die Dauer eines Taktzyklus der Kommunikationsschaltung (3),
- das Senden des einzelnen Rahmens eines Übertragungsintervalls am Ende des Übertragungsintervalls, das durch die Binärzahl definiert wird.

10. Verfahren zur Kommunikation nach einem der vorhergehenden Ansprüche, wobei jede der Kommunikationsschaltungen die Rahmen durch selektives Verringern der Spannung an den Anschlussklemmen ihres jeweiligen Akkumulators sendet.

11. Verfahren zur Kommunikation nach Anspruch 10, wobei die Rahmen in Basisbandbreite mit einer binären Frequenz zwischen 100 KHz und 1 MHz gesendet werden.

12. Verfahren zur Kommunikation nach Anspruch 10 oder 11, wobei jede der Kommunikationsschaltungen die Spannung an den Anschlussklemmen ihres jeweiligen Akkumulators selektiv senkt, indem eine elektrische Last zwischen den Anschlussklemmen dieses Akkumulators selektiv angeschlossen wird.

13. Batteriesystem (1), umfassend:

- eine Anzahl M von elektrochemischen Akkumulatoren (4), die jeweils in Reihe geschaltet sind,
- eine Steuerschaltung (52), die über eine elektrische Leistungsverbindung (71, 72), die dazu bestimmt ist, eine elektrische Last (55) an die elektrochemischen Akkumulatoren anzuschließen, an die elektrochemischen Akkumulatoren angeschlossen ist,
- M Kommunikationsschaltungen (3), die an die jeweiligen Akkumulatoren angefügt sind,

**dadurch gekennzeichnet, dass** die Kommunikationsschaltungen programmiert sind, um Datenrahmen zu der Steuervorrichtung über eine elektrische Leistungsverbindung derart zu übertragen, dass jede Kommunikationsschaltung des Index i für eine Abfolge von Übertragungsintervallen mit einer durchschnittlichen Dauer Tn ein Senden zu einem zufälligen Zeitpunkt eines einzelnen Rahmens mit einer Dauer von weniger als oder gleich $Lt_i$ während jedes dieser Übertragungsintervalle durchführt, mit $Tr_i > Lt_i * M$, wobei die Kommunikationsschaltungen (3) programmiert sind, damit sich die Übertragungsintervalle zeitlich überlappen.

**14.** Batteriesystem (1) nach Anspruch 13, wobei jede Kommunikationsschaltung des Index i das Senden zu einem zufälligen Zeitpunkt unter Einhaltung der Beziehung $Tr_i > Lt_i * 5 * M$ durchführt.

## Claims

**1.** Method for communication between a number M of communication circuits (3) and a device (52) for controlling electrochemical batteries, the communication circuits being coupled to respective electrochemical batteries (4) that are connected in series, and the communication circuits being configured to send data frames to the control device by way of an electrical power connection (71, 72) intended to connect an electrical load (55) to said electrochemical batteries,
**characterized**

- **in that** each communication circuit of index i, for a succession of transmission intervals having an average duration $Tr_i$, sends, at a random instant, a single frame of a duration shorter than or equal to $Lt_i$ during each of these transmission intervals, where $Tr_i > Lt_i * M$;
- and **in that** which said transmission intervals of the various communication circuits (3) overlap in time.

**2.** Communication method according to Claim 1, wherein, for each communication circuit (3), a plurality of said frames sent during successive transmission intervals are identical.

**3.** Communication method according to either one of the preceding claims, wherein said sending from each circuit of index i satisfies the inequality $Tr_i > Lt_i * 5 * M$.

**4.** Communication method according to any one of the preceding claims, wherein said average durations $Tr_i$ and said frame durations $Lt_i$ are configured such that the probability of the sending of a frame from one communication circuit (3) colliding with the sending of a frame from another communication circuit is less than $10^{-3}$.

**5.** Communication method according to any one of the preceding claims, wherein the sending of frames from the various communication circuits (3) is not synchronized.

**6.** Communication method according to any one of the preceding claims, wherein the communication between said communication circuits (3) and the control device (52) is one-way.

**7.** Communication method according to any one of the preceding claims, wherein a plurality of successive transmission intervals of the various communication circuits (3) have one and the same duration.

**8.** Communication method according to any one of the preceding claims, wherein at least two successive transmission intervals have different durations.

**9.** Communication method according to Claim 8, comprising, in each communication circuit (3):

- successive analogue-to-digital conversions by a converter (314) of which at least a reference voltage and an input are connected to floating voltage levels;
- storing the least significant bit for a plurality of said successive analogue-to-digital conversions;
- generating a binary number including the stored least significant bits;
- defining a transmission interval as a multiple of the binary number by the duration of a clock cycle of the communication circuit (3);
- performing said sending of the single frame at a transmission interval at the end of the transmission interval defined by said binary number.

**10.** Communication method according to any one of the preceding claims, wherein each of said communication circuits sends the frames by selectively lowering the voltage across the terminals of its respective battery.

**11.** Communication method according to Claim 10, wherein said frames are sent in baseband with a binary frequency of between 100 kHz and 1 MHz.

**12.** Communication method according to Claim 10 or 11, wherein each of said communication circuits selectively lowers the voltage across the terminals of its respective battery by selectively connecting an electrical load between the terminals of this battery.

**13.** Battery system (1), comprising:

- a number M of respective electrochemical batteries (4) that are connected in series;
- a control circuit (52) connected to the electrochemical batteries by way of an electrical power connection (71, 72) intended to connect an electrical load (55) to said electrochemical batteries;
- M communication circuits (3) coupled to respective batteries;

**characterized in that** the communication circuits are programmed to send data frames to the control device by way of an electrical power connection, such that each communication circuit of index i, for a succession of transmission intervals having an average duration $Tr_i$, sends, at a random instant, a single frame of a duration shorter than or equal to $Lt_i$ during each of these transmission intervals, where $Tr_i > Lt_i * M$, said communication circuits (3) being programmed such that their transmission intervals overlap in time.

14. Battery system (1) according to Claim 13, wherein each communication circuit of index i performs said sending at a random instant that satisfies the relationship $Tr_i > Lt_i * 5 * M$.

Fig. 1

Fig. 2

3

31

301

302

303

304

311      312      313

Fig. 3

Fig. 4

302

RAZ

321

322

+
-

RAZ

Clk

323

324

+
-

RAZ

Fig. 5

Fig. 6

Fig. 7

**EP 3 092 817 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2012061119 W
- WO 2012171919 A1